# EUROPEAN PATENT SPECIFICATION

(11) **EP 4 180 162 B1**
(45) Date of publication and mention of the grant of the patent: **30.04.2025**
(21) Application number: 21864205.6
(22) Date of filing: 25.08.2021
(51) Int. Cl.: B23K 9/007, B23K 9/02, B23K 9/23

(54) **JOINING METHOD**
FÜGEVERFAHREN
PROCÉDÉ DE LIAISON

(30) Priority: 01.09.2020 JP 2020146954
(43) Date of publication of application: 17.05.2023
(73) Proprietor: Panasonic Intellectual Property Management Co., Ltd., Osaka-shi, Osaka 540-6207 (JP)
(72) Inventor: FUJIWARA, Junji, Osaka-shi, Osaka 540-6207 (JP); NAKAGAWA, Tatsuyuki, Osaka-shi, Osaka 540-6207 (JP)
(74) Representative: Novagraaf International SA
(86) International application number: PCT/JP2021/031176
(87) International publication number: WO 2022/050147

(56) References cited:
- WO-A1-2019/167502
- DE-A1- 4 023 814
- JP-A- 2005 238 262
- JP-A- S5 510 375
- US-A1- 2019 257 333

## Description

### TECHNICAL FIELD

The present invention relates to a joining method.

### BACKGROUND ART

Patent Document 1 discloses a joint structure in which a first metal material and a dissimilar material that is difficult to be welded to the first metal material overlap each other, and a filler material (welding wire) is arc-welded through a through-portion of the dissimilar material.

A part of the melted filler material forms a flange so as to cover an upper peripheral area of the through-portion of the dissimilar material. Accordingly, the dissimilar material and the first metal material are fixed to each other by a compressive fixing force between the flange and the first metal material due to solidification shrinkage of the filler material onto the first metal material.

### SUMMARY OF THE INVENTION

### TECHNICAL PROBLEM

However, according to the invention of US 2019/257333 A1, which is a basis for the preamble of claim 1, moisture may enter from outside through a gap between overlapped surfaces of the flange of a third metal material and a second metal material. Electrolytic corrosion may thus occur in an area where the flange of the third metal material and the second metal material overlap each other due to the entry of the moisture, and joint strength between the materials may decrease.

In view of the foregoing, it is an object of the present invention to reduce occurrence of electrolytic corrosion in an area where a metal material and a dissimilar material overlap each other.

### SOLUTION TO THE PROBLEM

A first aspect is directed to a joining method of joining a first member made of a metal material and a second member made of a material difficult to be welded to the first member with the first member and the second member overlapping each other, the second member including a through-portion penetrating toward the first member, the joining method including: a first step of forming a third member for compressing and fixing the second member between the first member and the third member by welding a first filler material, which is weldable to the first member, to the first member through the through-portion; and a second step of forming a fourth member by covering a surface of the third member with a second filler material, which is weldable to the second member, and welding the second filler material to the second member.

According to the first aspect, the first step includes forming the third member by welding the first filler material to the first member through the through-portion of the second member. The second step includes forming the fourth member by covering the surface of the third member with the second filler material and welding the second filler material to the second member.

In this manner, the fourth member covers the surface of the third member and is welded to the second member, thereby closing the gap between the second member and the third member with the fourth member. Thus, moisture can be kept from entering an area where the second member and the third member overlap each other from the outside.

It is therefore possible to reduce occurrence of electrolytic corrosion in the area where the second member and the third member overlap each other and secure joining strength.

A second aspect is an embodiment of the first aspect. In the second aspect, the first step includes forming the third member by short-circuit arc welding of the first filler material to the first member, and the second step includes forming the fourth member by pulse welding of the second filler material to the second member.

According to the second aspect, in the first step, the first filler material is welded to the first member by short-circuit arc welding. In the second step, the second filler material is welded to the second member by pulse welding.

In the first step, short-circuit arc welding with a small spread of arc, in which the short-circuit state and the arc state are repeated, is performed in welding the first filler material to the first member through the through-portion. It is therefore possible to form the third member with a smaller amount of heat input to the second member. The short-circuit arc welding includes a welding method employing wire feed control in which forward feed and backward feed are repeated.

In the second step, pulse welding with straight polarity or AC pulse welding with a large spread of arc is performed. It is therefore possible to form the fourth member by spreading the melted second filler material so as to cover the entire surface of the third member.

A third aspect is an embodiment of the first or second aspect. In the third aspect, the second filler material has an outer diameter equal to an outer diameter of the first filler material or larger than the outer diameter of the first filler material.

According to the third aspect, the second filler material has the outer diameter equal to the outer diameter of the first filler material or larger than the outer diameter of the first filler material.

Specifically, the first filler material is welded to the first member through the through-portion. Thus, the first filler material preferably has a small diameter so as to be easily inserted in the through-portion. For example, if the through-portion has a hole of 2 mm to 5 mm, the outer diameter of the first filler material may be selectable from 0.8 mm, 0.9 mm, 1.0 mm, and 1.2 mm.

On the other hand, the second filler material is welded over the entire surface of the third member. Thus, the second filler material preferably has a large diameter so as to spread the arc easily. The second filler material with a large outer diameter is preferred because buckling is reduced. For example, relative to the first filler material with the diameter described above, the outer diameter of the second filler material may be selectable from 1.2 mm, 1.4 mm, and 1.6 mm.

A fourth aspect is an embodiment of any one of the first to third aspects. In the fourth aspect, the second step includes: periphery formation of forming a peripheral portion of the fourth member by welding the second filler material along an outer peripheral edge of the third member; and after the periphery formation, center formation of forming a central portion of the fourth member welded to the peripheral portion, by welding the second filler material to cover a central area of a surface of the third member.

According to the fourth aspect, the fourth member is formed by separately forming the central portion and the peripheral portion in the second step.

Specifically, the peripheral portion is formed by welding the second filler material to cover the peripheral area of the surface of the third member, and the second filler material is welded thereafter to the central area of the surface of the third member. Thus, the central and peripheral portions of the fourth member can conform to each other.

Since the center formation is performed after the periphery formation, the peripheral portion can block the outflow of the second filler material melted in the central area of the third member in the center formation.

A fifth aspect is an embodiment of any one of the first to third aspects. In the fifth aspect, the second step includes: center formation of forming a central portion of the fourth member by welding the second filler material to cover a central area of a surface of the third member; and after the center formation, periphery formation of forming a peripheral portion of the fourth member welded to the central portion and the second member, by welding the second filler material along an outer peripheral edge of the third member.

According to the fifth aspect, the fourth member is formed by separately forming the central portion and the peripheral portion in the second step.

Specifically, the central portion is formed by welding the second filler material to cover the central area of the surface of the third member, and the peripheral portion is formed thereafter by welding the second filler material along the outer peripheral edge of the central portion. Thus, the central and peripheral portions of the fourth member can conform to each other.

A sixth aspect is an embodiment of any one of the first to fifth aspects. In the sixth aspect, the first step includes: first joining of forming a first joint in the through-portion by welding the first filler material to the first member through the through-portion; and after the first joining, second joining of forming a second joint that projects radially outward from the through-portion and presses a peripheral edge of the through-portion, by welding the first filler material to the first joint under a welding condition different from a welding condition in the first joining.

According to the sixth aspect, in the first step, the third member is formed by separately forming the first j oint and the second j oint, thereby making it possible to use different welding methods or different welding conditions, depending on the material characteristics of the second member.

For example, short-circuit arc welding with a small spread of arc in which the short-circuit state and the arc state are repeated may be performed in welding the melted first filler material to the first member through the through-portion with heat input necessary for welding, thereby forming the first joint. After that, pulse welding with straight polarity or AC pulse welding with a large spread of arc may be performed with a low heat input that does not melt the second member, thereby forming the second joint. It is therefore possible to form the second joint with a smaller amount of heat input to the second member.

The welding conditions include, for example, a change in the outer diameter of a filler material, in addition to a switch between the short-circuit arc welding and the pulse welding.

### ADVANTAGES OF THE INVENTION

According to the aspects of the present invention, it is possible to reduce occurrence of electrolytic corrosion in an area where a metal material and a dissimilar material overlap each other.

### BRIEF DESCRIPTION OF THE DRAWINGS

FIG. 1 is a side cross-sectional view for illustrating a joint structure according to a first embodiment.
FIG. 2 is a side cross-sectional view for illustrating a joint structure according to a second embodiment.
FIG. 3 is a side cross-sectional view for illustrating a joint structure according to a third embodiment.
FIG. 4 is a side cross-sectional view for illustrating a joint structure according to a fourth embodiment.
FIG. 5 is a side cross-sectional view for illustrating a joint structure according to a fifth embodiment.
FIG. 6 is a side cross-sectional view for illustrating a joint structure according to a sixth embodiment.
FIG. 7 is a side cross-sectional view for illustrating a joint structure according to a seventh embodiment.
FIG. 8 is a side cross-sectional view for illustrating a joint structure according to an eighth embodiment.

### DESCRIPTION OF EMBODIMENTS

Embodiments of the present invention will be described in detail with reference to the drawings. Note that the following description of embodiments is merely an example in nature, and is not intended to limit the scope, applications, or use of the present invention. as defined by the claims.

### «First Embodiment»

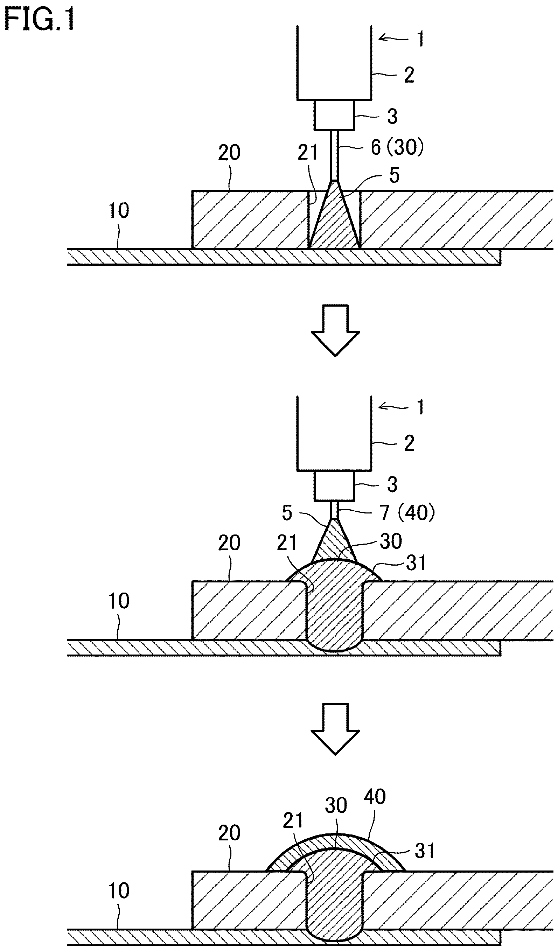

FIG. 1 shows a joint structure for joining together a first member 10 made of a metal material, a second member 20 made of a material that is difficult to be welded to the first member 10, and a third member 30 made of a first filler material 6.

The first member 10 is a plate-shaped member made of the metal material.

The second member 20 is a plate-shaped member made of the material that is difficult to be welded to the first member 10. The second member 20 is arranged to overlap with an upper side of the first member 10. The second member 20 has a circular through-portion 21.

In the present embodiment, the through-portion 21 is described as a circular through-hole, but may be an elliptical or elongated through-hole.

The third member 30 is made of the first filler material 6 that is a metal material of the same type as the first member 10. The metal materials of the same type are metals that can be welded to each other, and are not only metal materials of an identical quality but also metal materials satisfactorily weldable to each other, such as ferrous metal materials or nonferrous metal materials. In other words, the metal materials of the same type are materials of the same type that are compatible with each other in welding.

Specifically, examples of a combination of the first member 10 and the third member 30 for welding include the following. For example, combinations of ferrous metal materials include mild steel and mild steel, stainless steel and stainless steel, mild steel and high-tensile steel, high-tensile steel and high-tensile steel, etc. Examples of combinations of nonferrous metal materials include aluminum and aluminum, aluminum and aluminum alloy, aluminum alloy and aluminum alloy, etc.

The second member 20 as a dissimilar material is a material of different quality from the quality of the first member 10 and the third member 30 as metal materials of the same type, and is difficult to be welded to the first member 10 and the third member 30.

For example, when the first member 10 and the third member 30 as metal materials of the same type are ferrous metal materials, the second member 20 as a dissimilar material is a nonferrous metal material such as a copper material or an aluminum material.

The third member 30 is welded to the first member 10 through the through-portion 21. The third member 30 is provided with a flange 31 that presses the peripheral edge of the through-portion 21. The third member 30 then solidifies and shrinks on the first member 10, whereby the second member 20, which is a dissimilar material, is compressed and fixed between the flange 31 and the first member 10.

Moisture may enter the area where the flange 31 of the third member 30 and the second member 20 overlap each other, thereby causing electrolytic corrosion.

In the present embodiment, the gap in the area where the second and third members 20 and 30 overlap each other is closed with a fourth member 40.

Specifically, the fourth member 40 is made of a second filler material 7 as a filler material which is a metal material of the same type weldable to the second member 20. The fourth member 40 covers the surface of the third member 30. The fourth member 40 is welded to the second member 20.

### <Joining Method>

In the following description, the first member 10 is made of a mild steel material; the second member 20 is made of an aluminum material; the third member 30 that is a filler material for the first member 10 is made of a mild steel material; and the fourth member 40 that is a filler material for the second member 20 is made of an aluminum material. The through-portion 21 has a hole diameter of 5 mm. The first filler material 6 has an outer diameter of 1.2 mm. The second filler material 7 has an outer diameter of 1.6 mm.

An arc welder 1 includes a nozzle 2 and a tip 3. The nozzle 2 supplies a shielding gas or the like to a welding point of a welding target. The tip 3 supplies a welding current to the third member 30.

The arc welder 1 performs metal active gas (MAG) welding using a mixed gas of argon (Ar) and carbon dioxide (CO₂) as a shielding gas or CO₂ gas shielded arc welding using carbon dioxide (CO₂) as a shielding gas, in welding the first filler material 6 which is a mild steel material.

The arc welder 1 performs argon gas welding using argon (Ar) as a shielding gas in welding the second filler material 7 which is an aluminum material.

The arc welder 1 performs a first step. In the first step, the first filler material 6 as a welding electrode is welded to the first member 10 as a base material through the through-portion 21. Short-circuit arc welding is performed at this time in which a short-circuit state where the first filler material 6 and the first member 10 are short-circuited and an arc state where an arc is generated between the first filler material 6 and the first member 10 are repeated. The short-circuit arc welding causes a small spread of an arc 5.

The arc welder 1 supplies a welding current, while feeding the first member 10 with the first filler material 6 (i.e., the third member 30) as a welding electrode through the through-portion 21, thereby releasing the short-circuit between the first filler material 6 and the first member 10 and generating the arc 5 between the first filler material 6 and the first member 10.

The arc 5 thus generated in the arc state generates droplets at the end of the first filler material 6. On the other hand, in the short-circuit state, the droplets generated at the end of the first filler material 6 are brought into contact with, and transferred to, the first member 10.

The third member 30 melted by the arc welding is melt-bonded to the first member 10 and is laminated in the through-portion 21. Then, the melted third member 30 fills the through-portion 21 up, flows out to an upper peripheral edge of the through-portion 21, and spreads in a flange shape.

In the process in which the melted third member 30 turns into a bead, the third member 30 is provided with the flange 31 that presses the peripheral edge of the through-portion 21. The flange 31 projects radially outward from the through-portion 21 on a surface (an upper surface in FIG. 1) of the second member 20 facing opposite to the first member 10.

The third member 30 then solidifies and shrinks on the first member 10, whereby the second member 20, which is a dissimilar material, is compressed and fixed between the flange 31 and the first member 10.

In this manner, the welding wire as the filler material, which is the third member 30, is melted and supplied to the first member 10 through the through-portion 21 of the second member 20. Accordingly, a flange-shaped bead for securing a strength is formed on the second member 20 to fasten the second member 20 between the first member 10 and the bead by compression fixing.

The second member 20 and the third member 30 do not have to be fusion welded. An intermetallic compound, if any is formed through the fusion welding, does not cause any problem, since the fusion welding aims at the compression fixing in the flange shape.

The arc welder 1 performs a second step. In the second step, the second filler material 7 (i.e., the fourth member 40), which is weldable to the second member 20, is used to cover the surface of the third member 30 and is welded to the second member 20. Specifically, in welding the second filler material 7 to the second member 20, the arc welder 1 performs pulse welding in a pulse waveform with a peak current and a base current alternately repeated in DC straight polarity welding or AC welding with alternating polarity. In the pulse welding, the spread of the arc 5 is increased with a low heat input that does not melt the second member 20, thereby increasing the amount of heat input to the second filler material 7 as the welding electrode and increasing the amount of welding.

In the pulse welding, the droplets generated at the end of the second filler material 7 are detached from the second filler material 7 once per pulse consisting of the peak current and the base current, and are detached and transferred toward the flange 31 and the second member 20.

Here, the "DC straight polarity welding" is welding using DC, in which the second filler material 7 as the welding electrode serves as a negative pole and the first member 10 and the second member 20 as the base material serve as a positive pole, thereby increasing the heat input to the second filler material 7 as the welding electrode. This welding reduces the heat input to the base material and promotes melting of the second filler material 7 as the welding electrode.

On the other hand, the "AC welding with alternating polarity" is welding using AC, in which, for example, electrode-positive (reverse polarity) welding is performed at the waveform with a peak current, and electrode-negative (straight polarity) welding is performed at the waveform with a base current. At the time of the peak current of the reverse polarity, the first member 10 and the second member 20 as the base material serve as the negative pole, and the second filler material 7 as the welding electrode serves as the positive pole. At the time of the base current of the straight polarity, the first member 10 and the second member 20 as the base material serve as the positive pole, and the second filler material 7 as the welding electrode serves as the negative pole.

Thus, in the "AC welding with alternating polarity," welding is performed with a larger heat input to the first member 10 and the second member 20 as the base material at the time of the peak current of reverse polarity, and with a larger heat input to the second filler material 7 as the welding electrode at the time of the base current of straight polarity. Thus, the heat input to the base material is reduced compared to the DC welding, which promotes melting of the second filler material 7 as the welding electrode.

An example in which the pulse welding with straight polarity is performed has been described. However, short-circuit arc welding in which the arc state and the short-circuit state are repeated may be performed as a welding method that causes a small spread of the arc 5 but a smaller amount of heat input to the second member 20.

The arc welder 1 supplies a welding current while feeding the surface of the third member 30 with the second filler material 7 (i.e., the fourth member 40), thereby generating an arc 5. The fourth member 40 melted by the arc welding is melt-bonded to the second member 20 and is laminated to cover the surface of the third member 30.

As described above, in the joining method according to this embodiment, the fourth member 40 is used to cover the surface of the third member 30 and is welded to the second member 20. Accordingly, the fourth member 40 closes the gap between the second member 20 and the third member 30 to reduce the entry of moisture from the outside. This keeps moisture from entering an area where the second member 20 and the third member 30 overlap each other from the outside.

It is therefore possible to reduce the occurrence of electrolytic corrosion in the area where the second member 20 and the third member 30 overlap each other and secure joint strength.

The second welding is performed in this manner, using the second filler material 7 (i.e., the fourth member 40) as a filler material of the identical quality with the second member 20 and different from the third member 30, thereby welding the molten metal so as to cover the flange-shaped bead made of the third member 30 and creating a bead larger than the size of the flange shape. Accordingly, the fourth member 40 can be fusion welded to the second member 20 of the identical quality with the fourth member 40.

Fusion welding the materials of the identical quality can reduce the entry of moisture or other substances from the outside and can reduce the electrolytic corrosion, without typically used other means, such as an adhesive, a sealant, or a sealing agent.

Basically, the first and third members 10 and 30 are made of a material with a higher melting point than the second and fourth members 20 and 40. Thus, the interface between the third and fourth members 30 and 40 is not fusion welded or slightly fusion welded.

Accordingly, the bead of the fourth member 40 can be formed on the bead of the third member 30 of the flange shape without influence, such as deformation of the flange shape of the third member 30.

### «Second Embodiment»

In the following description, the same reference characters designate the same components as those of the first embodiment, and the description is focused only on the differences between this embodiment and the first embodiment.

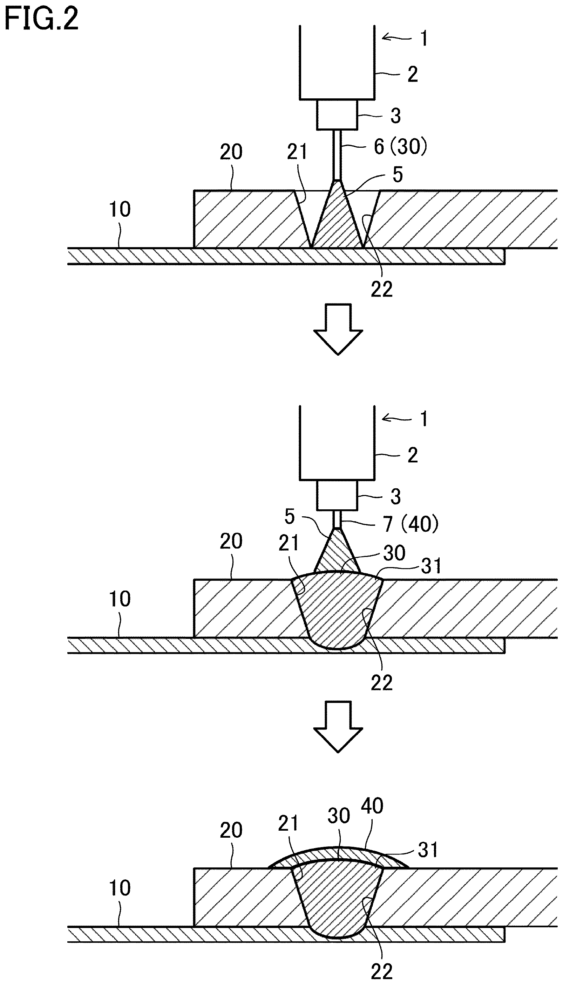

As shown in FIG. 2, the second member 20 has the through-portion 21. The through-portion 21 has a tapered portion 22 that is tapered toward the first member 10.

The arc welder 1 performs a first step. In the first step, the first filler material 6 (i.e., the third member 30) is melted by short-circuit arc welding. The melted third member 30 flows along the tapered portion 22 of the through-portion 21 to gather to the central area of the through-portion 21 and is melt-bonded to the first member 10.

The melted third member 30 fills the through-portion 21 up, and spreads in a flange shape on the upper surface of the tapered portion 22.

In the process in which the melted third member 30 turns into a bead, the third member 30 is provided with the flange 31 that presses the tapered portion 22 of the through-portion 21.

The third member 30 then solidifies and shrinks on the first member 10, whereby the second member 20, which is a dissimilar material, is compressed and fixed between the flange 31 and the first member 10.

The arc welder 1 performs a second step. In the second step, a welding current is supplied, while feeding the surface of the third member 30 with the second filler material 7 (i.e., the fourth member 40), thereby generating an arc 5. The fourth member 40 melted by the arc welding is melt-bonded to the second member 20 and is laminated to cover the surface of the third member 30.

As described above, in the joining method according to this embodiment, the through-portion 21 has the tapered portion 22, and the flange 31 is solidified in the shape along the tapered portion 22, thereby reducing the thickness of the flange 31 protruding from the second member 20. Accordingly, the thickness of the fourth member 40 protruding from the second member 20 can also be reduced.

### «Third Embodiment»

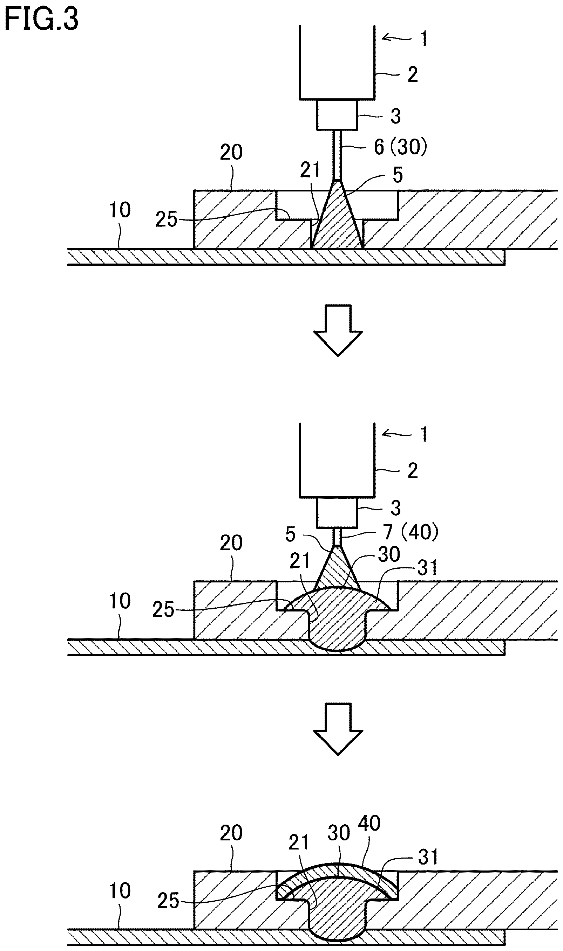

As shown in FIG. 3, the second member 20 has a stepped portion 25 open to the surface (i.e., the upper surface in FIG. 3) opposite to the first member 10, and a through-portion 21 in the bottom of the step 25.

The arc welder 1 performs a first step. In the first step, the first filler material 6 (i.e., the third member 30) is melted by short-circuit arc welding. The melted third member 30 is melt-bonded to the first member 10.

Then, the melted third member 30 fills the through-portion 21 up, flows out to the upper peripheral edge of the through-portion 21, that is, the bottom of the stepped portion 25, and spreads in a flange shape.

In the process in which the melted third member 30 turns into a bead, the third member 30 is provided with the flange 31 that presses the peripheral edge of the through-portion 21.

The third member 30 then solidifies and shrinks on the first member 10, whereby the second member 20, which is a dissimilar material, is compressed and fixed between the flange 31 and the first member 10.

The arc welder 1 performs a second step. In the second step, a welding current is supplied, while feeding the surface of the third member 30 with the second filler material 7 (i.e., the fourth member 40), thereby generating an arc 5. The fourth member 40 melted by the arc welding is melt-bonded to the stepped portion 25 of the second member 20 and is laminated to cover the surface of the third member 30.

As described above, in the joining method according to this embodiment, the flange 31 of the third member 30 is disposed in the stepped portion 25, thereby making it possible to reduce the protrusion of the flange 31 from the second member 20. The thickness of the fourth member 40 protruding from the second member 20 can also be reduced.

### «Fourth Embodiment»

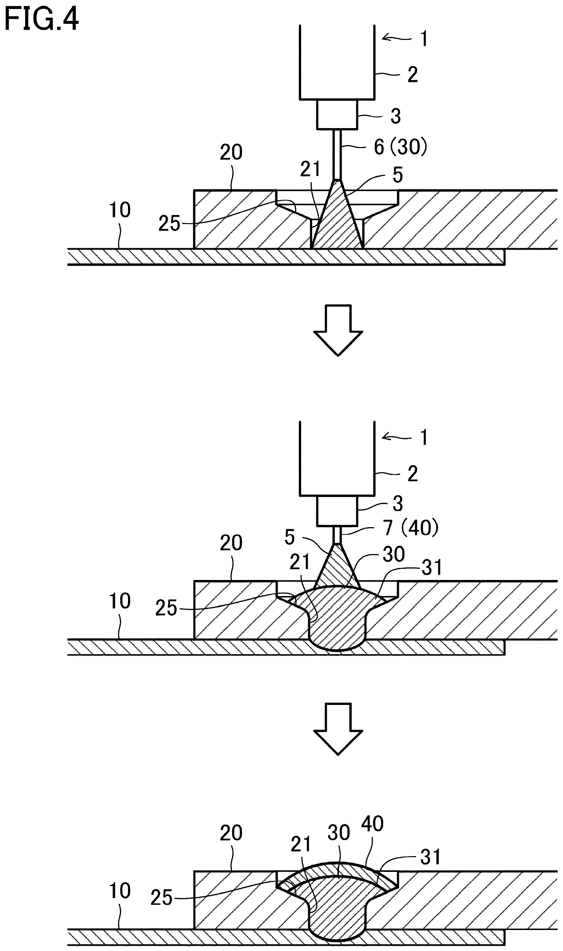

As shown in FIG. 4, the second member 20 has a stepped portion 25 open to the surface (i.e., the upper surface in FIG. 4) opposite to the first member 10, and a through-portion 21 in the bottom of the stepped portion 25. The bottom of the stepped portion 25 is inclined toward the through-portion 21.

The arc welder 1 performs a first step. In the first step, the first filler material 6 (i.e., the third member 30) is melted by short-circuit arc welding. The melted third member 30 is melt-bonded to the first member 10. If the melted third member 30 reaches the inclined surface of the stepped portion 25, such a third member 30 flows along the inclined surface of the stepped portion 25 toward the through-portion 21 and is melt-bonded toward the first member 10.

Then, the melted third member 30 fills the through-portion 21 up, flows out to the upper peripheral edge of the through-portion 21, that is, the bottom of the stepped portion 25, and spreads in a flange shape on the inclined surface of the stepped portion 25.

In the process in which the melted third member 30 turns into a bead, the third member 30 is provided with the flange 31 that presses the inclined surface of the stepped portion 25.

The third member 30 then solidifies and shrinks on the first member 10, whereby the second member 20, which is a dissimilar material, is compressed and fixed between the flange 31 and the first member 10.

The arc welder 1 performs a second step. In the second step, a welding current is supplied, while feeding the surface of the third member 30 with the second filler material 7 (i.e., the fourth member 40), thereby generating an arc 5. The fourth member 40 melted by the arc welding flows along the inclined surface of the stepped portion 25. More specifically, the fourth member 40 flows effectively to close the gap between the second and third members 20 and 30 from the outside. Then, the melted fourth member 40 is melt-bonded to the second member 20 and laminated to cover the surface of the third member 30.

As described above, in the joining method according to this embodiment, the stepped portion 25 has the bottom inclined toward the through-portion 21, thereby allowing the melted third member 30 to flow easily toward the through-portion 21.

The melted fourth member 40 flows along the inclined surface of the stepped portion 25, allowing the gap between the second and third members 20 and 30 to be closed effectively from the outside and the fourth member 40 to be melt-bonded to the second member 20.

Further, the flange 31 of the third member 30 is disposed in the stepped portion 25, thereby making it possible to reduce the protrusion of the flange 31 from the second member 20. The thickness of the fourth member 40 protruding from the second member 20 can also be reduced.

### «Fifth Embodiment»

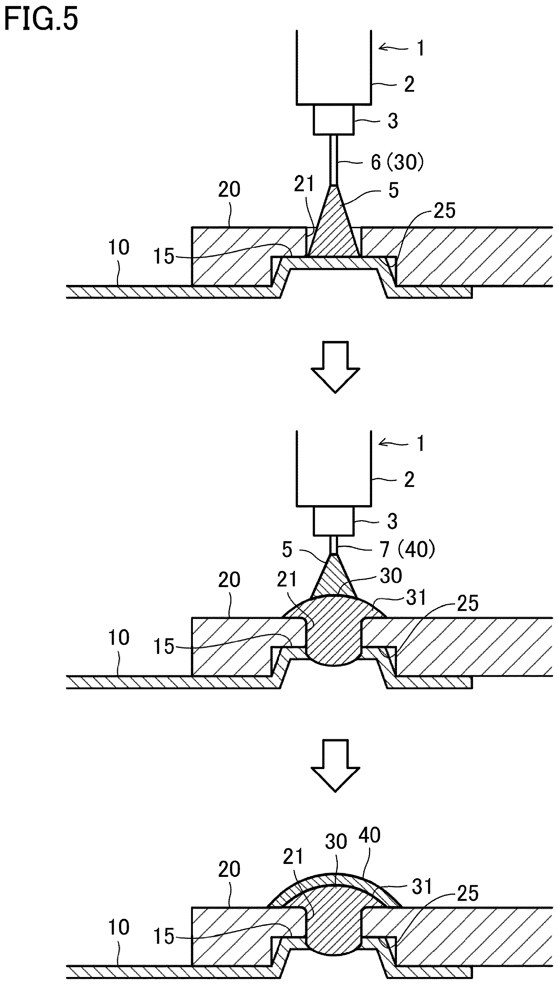

As shown in FIG. 5, the second member 20 has a stepped portion 25 open to the surface (i.e., the lower surface in FIG. 5) overlapping the first member 10, and a through-portion 21 in the bottom of the stepped portion 25.

The first member 10 has an expansion 15 toward the stepped portion 25. The expansion 15 is fitted into the stepped portion 25.

The arc welder 1 performs a first step. In the first step, the first filler material 6 (i.e., the third member 30) is melted by short-circuit arc welding. The melted third member 30 is melt-bonded to the first member 10.

Then, the melted third member 30 fills the through-portion 21 up, flows out to an upper peripheral edge of the through-portion 21, and spreads in a flange shape.

In the process in which the melted third member 30 turns into a bead, the third member 30 is provided with the flange 31 that presses the peripheral edge of the through-portion 21.

The third member 30 then solidifies and shrinks on the first member 10, whereby the second member 20, which is a dissimilar material, is compressed and fixed between the flange 31 and the first member 10.

The arc welder 1 performs a second step. In the second step, a welding current is supplied, while feeding the surface of the third member 30 with the second filler material 7 (i.e., the fourth member 40), thereby generating an arc 5. The fourth member 40 melted by the arc welding is melt-bonded to the second member 20 and is laminated to cover the surface of the third member 30.

As described above, in the joining method according to this embodiment, the first and second members 10 and 20 can be aligned easily by making the stepped portion 25 fitted with the expansion 15 in overlapping the first and second members 10 and 20.

Further, a penetration bead can be sufficiently formed on the back surface of the first member 10, which is opposite to the second member 20, by utilizing an empty space on the back of the expansion 15 of the first member 10 in melting the third member 30 with respect to the first member 10 by arc welding. The strength can be further increased by the so-called "penetration welding" by which a weld bead is formed as if it were welded from the back of the first member 10 as well.

The empty space on the back of the expansion 15 of the first member 10 can provide a space for a weld bead partially protruding as a penetration bead from the back surface of the first member 10.

### «Sixth Embodiment»

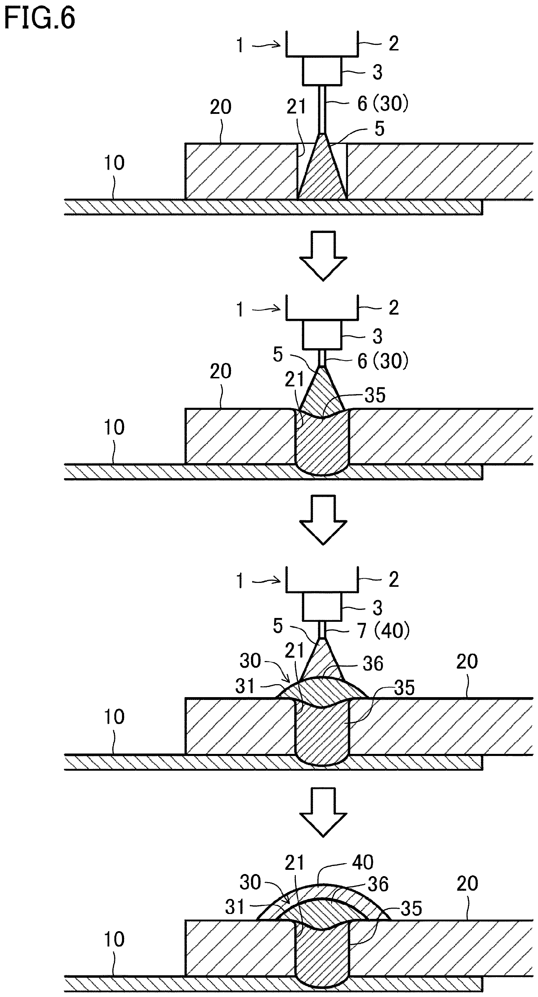

As shown in FIG. 6, the second member 20 has a through-portion 21.

The arc welder 1 performs a first step. The first step includes first joining and second joining. In the first joining, a first joint 35 is formed inside the through-portion 21 by welding the first filler material 6 to the first member 10 through the through-portion 21.

Specifically, short-circuit arc welding with a small spread of the arc 5, in which a short-circuit state and an arc state are repeated, is performed in welding the melted third member 30 to the first member 10 through the through-portion 21 with heat input necessary for welding, thereby forming the first joint 35.

In the second joining, the first filler material 6 is welded to the first joint 35 under welding conditions different from those in the first joining. Specifically, pulse welding with straight polarity or alternating polarity AC pulse welding is performed, with a low heat input that does not melt the second member 20, to increase the spread of the arc 5 and the amount of heat input to the first filler material 6 as the welding electrode, thereby forming the second joint 36. It is therefore possible to form the flange 31 with a smaller amount of heat input to the second member 20.

The welding conditions include, for example, a change in the outer diameter of the first filler material 6, in addition to a switch between the short-circuit arc welding and the pulse welding. For example, in a case in which the first filler material 6 to be used in the first joining has an outer diameter of 0.8 mm, 0.9 mm, 1.0 mm, or 1.2 mm, the first filler material 6 to be used in the second joining may have an outer diameter of 1.2 mm, 1.4 mm, or 1.6 mm. If the outer diameter of the first filler material 6 is changed, the second joining may be performed by the short-circuit arc welding.

In this manner, in the process in which the melted third member 30 turns into a bead, the first joint 35 and the second joint 36 are formed to form the third member 30. The first joint 35 is melt-bonded to the first member 10. The second joint 36 is melt-bonded to the first joint 35 and forms a flange 31 that presses the peripheral edge of the through-portion 21.

Preferably, the first joint 35 is welded to have its upper portion depressed at the center. Such an upper portion facilitates the determination of the welding position in welding the second joint 36 to the first joint 35. It also facilitates the gathering of the melted second joint 36 at the depressed center of the first joint 35 and finer shaping of the second joint 36.

The third member 30 then solidifies and shrinks on the first member 10, whereby the second member 20, which is a dissimilar material, is compressed and fixed between the flange 31 and the first member 10.

The arc welder 1 performs a second step. In the second step, a welding current is supplied, while feeding the surface of the third member 30 with the second filler material 7 (i.e., the fourth member 40), thereby generating an arc 5. The fourth member 40 melted by the arc welding is melt-bonded to the second member 20 and is laminated to cover the surface of the third member 30.

As described above, in the joining method according to this embodiment, the third member 30 is formed by separately forming the first joint 35 and the second joint 36, thereby making it possible to use different welding methods or different welding conditions, depending on the material characteristics of the second member 20.

The shapes of the first and second members 10 and 20 are mere examples and may be in any other suitable combination.

### «Seventh Embodiment»

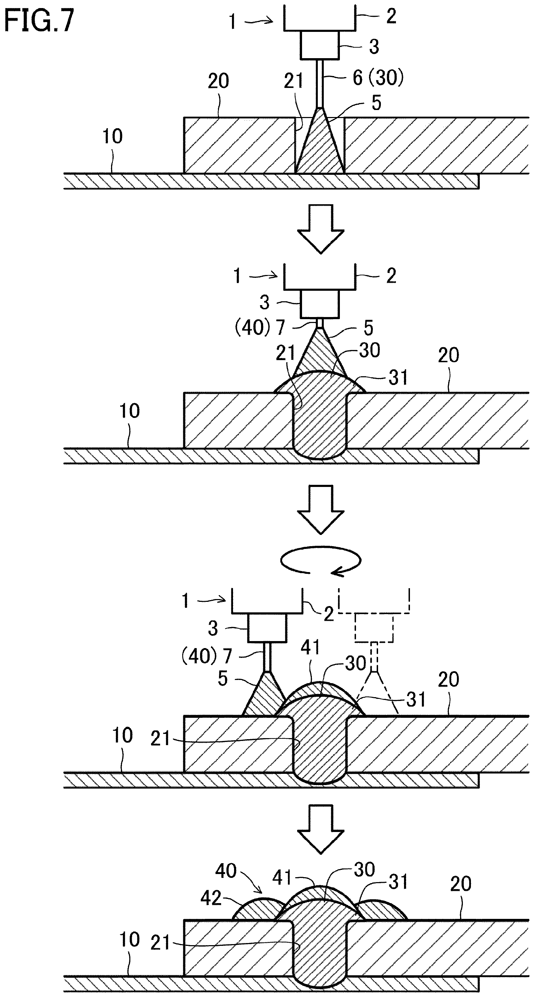

As shown in FIG. 7, the second member 20 has a through-portion 21.

The arc welder 1 performs a first step. In the first step, the first filler material 6 (i.e., the third member 30) is melted by short-circuit arc welding. The melted third member 30 is melt-bonded to the first member 10. The melted third member 30 fills the through-portion 21 up, flows out to an upper peripheral edge of the through-portion 21, and spreads in a flange shape.

In the process in which the melted third member 30 turns into a bead, the third member 30 is provided with the flange 31 that presses the peripheral edge of the through-portion 21.

The third member 30 then solidifies and shrinks on the first member 10, whereby the second member 20, which is a dissimilar material, is compressed and fixed between the flange 31 and the first member 10.

The arc welder 1 performs a second step. The second step includes center formation and periphery formation. In the center formation, the second filler material 7 is welded to cover a central area of the surface of the third member 30, thereby forming a central portion 41 of the fourth member 40.

Specifically, a welding current is supplied, while feeding the central area of the surface of the third member 30 with the second filler material 7 (i.e., the fourth member 40), thereby generating an arc 5. The fourth member 40 melted by the arc welding is laminated to cover the surface of the third member 30. The central portion 41 of the fourth member 40 is formed in this manner.

In the periphery formation, the second filler material 7 is welded along the outer peripheral edge of the third member 30, thereby forming a peripheral portion 42 of the fourth member 40. The peripheral portion 42 is welded to the central portion 41 and the second member 20.

Specifically, the nozzle 2 of the arc welder 1 is turned along the outer peripheral edge of the central portion 41 to supply the melted fourth member 40 to the outer peripheral edge of the central portion 41. The melted fourth member 40 is welded to the central portion 41 and the second member 20. The peripheral portion 42 of the fourth member 40 is formed in this manner.

The center formation and the periphery formation may be performed by either the short-circuit arc welding or the pulse welding.

As described above, in the joining method according to this embodiment, the central portion 41 is formed by arc welding to cover the central area of the surface of the third member 30, and the peripheral portion 42 is formed thereafter by arc welding along the outer peripheral edge of the central portion 41. Thus, the central portion 41 and the peripheral portion 42 can conform to each other.

### «Eighth Embodiment»

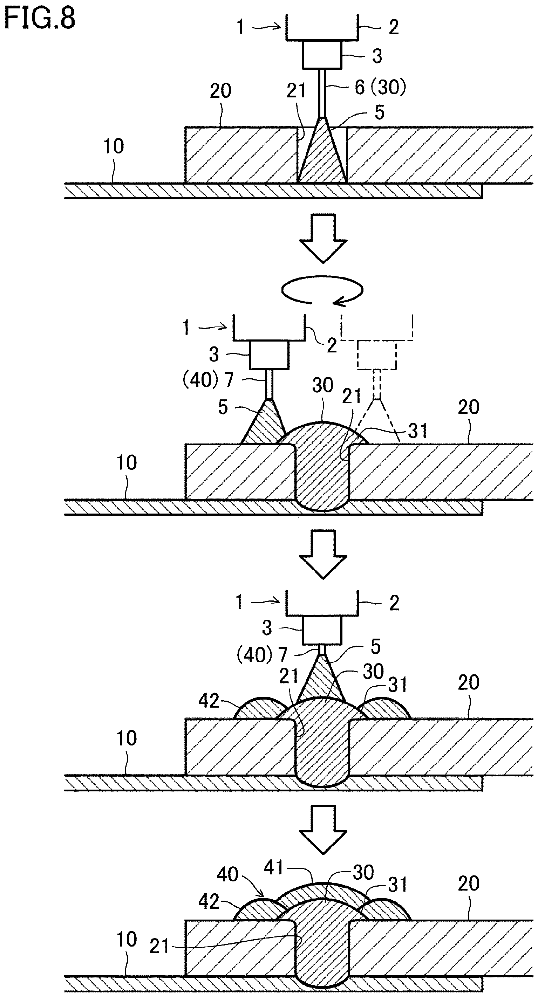

As shown in FIG. 8, the second member 20 has a through-portion 21.

The arc welder 1 performs a first step. In the first step, the first filler material 6 (i.e., the third member 30) is melted by short-circuit arc welding. The melted third member 30 is melt-bonded to the first member 10. The melted third member 30 fills the through-portion 21 up, flows out to an upper peripheral edge of the through-portion 21, and spreads in a flange shape.

In the process in which the melted third member 30 turns into a bead, the third member 30 is provided with the flange 31 that presses the peripheral edge of the through-portion 21.

The third member 30 then solidifies and shrinks on the first member 10, whereby the second member 20, which is a dissimilar material, is compressed and fixed between the flange 31 and the first member 10.

The arc welder 1 performs a second step. The second step includes periphery formation and center formation. In the periphery formation, the second filler material 7 is welded along the outer peripheral edge of the third member 30, thereby forming a peripheral portion 42 of the fourth member 40.

Specifically, the nozzle 2 of the arc welder 1 is turned along the outer peripheral edge of the flange 31 to supply the melted second filler material 7 (i.e., fourth member 40) to the outer peripheral edge of the flange 31. The melted fourth member 40 is welded to the second member 20 along the outer peripheral edge of the flange 31. The peripheral portion 42 of the fourth member 40 is formed in this manner.

In the center formation, the second filler material 7 is welded to cover the central area of the surface of the third member 30, thereby forming a central portion 41 of the fourth member 40. The central portion 41 is welded to the peripheral portion 42.

Specifically, a welding current is supplied, while feeding the central area of the surface of the third member 30 with the fourth member 40, thereby generating an arc 5. The fourth member 40 melted by the arc welding is melt-bonded to the peripheral portion 42 and is laminated to cover the surface of the third member 30. The central portion 41 of the fourth member 40 is formed in this manner.

The center formation and the periphery formation may be performed by either the short-circuit arc welding or the pulse welding.

As described above, in the joining method according to this embodiment, the peripheral portion 42 is formed by arc welding to cover the peripheral area of the surface of the third member 30, and the central portion 41 is formed thereafter by arc welding in the central area of the surface of the third member 30. Thus, the central portion 41 and the peripheral portion 42 can conform to each other.

Since the center formation is performed after the periphery formation, the peripheral portion 42 can block the outflow of the second filler material melted in the central area of the third member 30 in the center formation.

### «Other Embodiments»

The embodiments described above may be modified as follows.

While the first member 10 is subjected to arc welding in the embodiments, the welding is not limited thereto. Specifically, the filler material as the third member 30 is grouped into a consumable electrode type and a non-consumable electrode type. For example, laser filler welding may be performed in which the welding wire as a filler material of the consumable electrode type used as the third member 30 may be replaced with a filler wire as a filler material of the non-consumable electrode type to perform laser welding on the first member 10.

In the laser filler welding, the first member 10 is irradiated with a laser to ensure sufficient penetration in the surface of the first member 10, and then, the laser is emitted only to the to-be-supplied filler wire, thereby melting the filler wire that is the third member 30. Accordingly, the third member 30 fills the through-portion 21 up with a smaller amount of heat input to the second member 20.

Further, a larger beam diameter is secured by defocusing and lowering the power density of the laser, thereby making it possible to preheat the second member 20 by utilizing the peripheral area of the beam diameter of the laser. This method allows the melted filler wire, which is the third member 30, to conform to the second member 20 more easily. Due to the effect of this method, the gap between the second member 20 and the third member 30 is closed so as to prevent the entry of moisture from the outside, thereby keeping the moisture from entering an area where the second member 20 and the third member 30 overlap each other from the outside.

The third member 30 and the fourth member 40 may be formed by hybrid welding of arc welding and laser welding. Specifically, the hybrid welding may be performed in which the third member 30 is formed by laser filler welding and the fourth member 40 is formed by arc welding.

Alternatively, the hybrid welding may be performed in which the third member 30 is formed by arc welding using a filler material of the consumable electrode type and the fourth member 40 is formed by laser filler welding using a filler wire as a filler material of the non-consumable electrode type.

These laser welding processes may be combined. For example, the output of the laser is relatively lowered by defocusing and reducing the power density of the laser, or by changing the continuous output of the laser to a pulse oscillation output, or by lowering the duty, which is the ratio of ON and OFF of the pulse oscillation output; and at least one or more points on the periphery of the through-portion 21 of the second member 20 and on the upper part of the third member 30 may be preheated by being irradiated in advance with such a lower output laser. This method can increase the conformity of the second member 20, the third member 30, and the fourth member 40 in welding. It is therefore possible to keep moisture from entering an area where the second member 20, the third member 30, and the fourth member 40 overlap each other from the outside.

In this embodiment, the first member 10 is made of a mild steel material, while the second member 20 is made of an aluminum material. Alternatively, the first member 10 may be made of an aluminum material, while the second member 20 may be made of a mild steel material. In this case, it is not necessary to perform short-circuit arc welding in welding the third member 30 to the first member 10, since the mild steel material of the second member 20 has a higher melting point than the aluminum material of the first member 10.

### INDUSTRIAL APPLICABILITY

As can be seen from the foregoing description, the present invention can produce a highly practical effect of being able to reduce occurrence of electrolytic corrosion in an area where a metal material and a dissimilar material overlap each other, and is therefore very useful and offers high industrial applicability.

### DESCRIPTION OF REFERENCE CHARACTERS

- 6: First Filler Material
- 7: Second Filler Material
- 10: First Member
- 20: Second Member
- 21: Through-Portion
- 30: Third Member
- 35: First Joint
- 36: Second Joint
- 40: Fourth Member
- 41: Central Portion
- 42: Peripheral Portion

## Claims

1. A joining method of joining a first member (10) made of a metal material and a second member (20) made of a material difficult to be welded to the first member with the first member and the second member overlapping each other,
the second member including a through-portion (21) penetrating toward the first member, the joining method comprising:
a first step of forming a third member (30) for compressing and fixing the second member between the first member and the third member by welding a first filler material (6), which is weldable to the first member, to the first member through the through-portion; the joining method being **characterized by**
a second step of forming a fourth member (40) by covering a surface of the third member with a second filler material (7), which is weldable to the second member, and welding the second filler material to the second member.

2. The joining method of claim 1, wherein
the first step includes forming the third member by short-circuit arc welding of the first filler material to the first member, and
the second step includes forming the fourth member by pulse welding of the second filler material to the second member.

3. The joining method of claim 1 or 2, wherein
the second filler material has an outer diameter equal to an outer diameter of the first filler material or larger than the outer diameter of the first filler material.

4. The joining method of any one of claims 1 to 3, wherein
the second step includes:
periphery formation of forming a peripheral portion (42) of the fourth member by welding the second filler material along an outer peripheral edge of the third member; and
after the periphery formation, center formation of forming a central portion (41) of the fourth member welded to the peripheral portion, by welding the second filler material to cover a central area of a surface of the third member.

5. The joining method of any one of claims 1 to 3, wherein
the second step includes:
center formation of forming a central portion (41) of the fourth member by welding the second filler material to cover a central area of a surface of the third member; and
after the center formation, periphery formation of forming a peripheral portion (42) of the fourth member welded to the central portion and the second member, by welding the second filler material along an outer peripheral edge of the third member.

6. The joining method of any one of claims 1 to 5, wherein
the first step includes:
first joining of forming a first joint (35) in the through-portion by welding the first filler material to the first member through the through-portion; and
after the first joining, second joining of forming a second joint (36) that projects radially outward from the through-portion and presses a peripheral edge of the through-portion, by welding the first filler material to the first joint under a welding condition different from a welding condition in the first joining.

## Patentansprüche

1. Verbindungsverfahren zum Verbinden eines ersten Elements (10), das aus einem Metallmaterial besteht, und eines zweiten Elements (20), das aus einem Material besteht, das schwer an das erste Element zu schweißen ist, wobei das erste Element und das zweite Element einander überlappen,
wobei das zweite Element einen Durchgangsabschnitt (21) beinhaltet, der zum ersten Element durchdringt.
wobei das Verbindungsverfahren Folgendes umfasst:
einen ersten Schritt des Bildens eines dritten Elements (30) zum Zusammendrücken und Befestigen des zweiten Elements zwischen dem ersten Element und dem dritten Element durch Schweißen eines ersten Füllmaterials (6), das an das erste Element schweißbar ist, durch den Durchgangsabschnitt an das erste Element;
wobei das Verbindungsverfahren durch Folgendes gekennzeichnet ist
einen zweiten Schritt des Bildens eines vierten Elements (40) durch Abdecken einer Fläche des dritten Elements mit einem zweiten Füllmaterial (7), das an das zweite Element schweißbar ist, und Schweißen des zweiten Füllmaterials an das zweite Element.

2. Verbindungsverfahren nach Anspruch 1, wobei
der erste Schritt das Bilden des dritten Elements durch Kurzschlusslichtbogenschweißen des ersten Füllmaterials an das erste Element beinhaltet, und
der zweite Schritt das Bilden des vierten Elements durch Impulsschweißen des zweiten Füllmaterials an das zweite Element beinhaltet.

3. Verbindungsverfahren nach Anspruch 1 oder 2, wobei
das zweite Füllmaterial einen Außendurchmesser aufweist, der gleich einem Außendurchmesser des ersten Füllmaterials ist oder größer als der Außendurchmesser des ersten Füllmaterials ist.

4. Verbindungsverfahren nach einem der Ansprüche 1 bis 3, wobei
die zweite Schritt Folgendes beinhaltet:
Umfangsbildung zum Bilden eines Umfangsabschnitts (42) des vierten Elements durch Schweißen des zweiten Füllmaterials entlang einer Außenumfangskante des dritten Elements; und
nach der Umfangsbildung Mittenbildung zum Bilden eines Mittenabschnitts (41) des vierten Elements, das an den Umfangsabschnitt geschweißt ist, durch Schweißen des zweiten Füllmaterials, um einen Mittenbereich einer Fläche des dritten Elements abzudecken.

5. Verbindungsverfahren nach einem der Ansprüche 1 bis 3, wobei
die zweite Schritt Folgendes beinhaltet:
Mittenbildung zum Bilden eines Mittenabschnitts (41) des vierten Elements durch Schweißen des zweiten Füllmaterials, um einen Mittenbereich einer Fläche des dritten Elements abzudecken; und
nach der Mittenbildung Umfangsbildung zum Bilden eines Umfangsabschnitts (42) des vierten Elements, das an den Mittenabschnitt und das zweite Element geschweißt ist, durch Schweißen des zweiten Füllmaterials entlang einer Außenumfangskante des dritten Elements.

6. Verbindungsverfahren nach einem der Ansprüche 1 bis 5, wobei
der erste Schritt Folgendes beinhaltet:
erstes Verbinden zum Bilden einer ersten Verbindung (35) im Durchgangsabschnitt durch Schweißen des ersten Füllmaterials durch den Durchgangsabschnitt an das erste Element; und
nach dem ersten Verbinden zweites Verbinden zum Bilden einer zweiten Verbindung (36), die vom Durchgangsabschnitt radial nach außen vorsteht und gegen eine Umfangskante des Durchgangsabschnitts drückt, durch Schweißen des ersten Füllmaterials unter einer Schweißbedingung, die sich von einer Schweißbedingung in der ersten Verbindung unterscheidet, an die erste Verbindung.

## Revendications

1. Procédé de liaison pour relier un premier élément (10) réalisé avec un matériau métallique et un deuxième élément (20) réalisé avec un matériau difficile à souder au premier élément avec le premier élément et le deuxième élément qui se chevauchent,
le deuxième élément comprenant une partie débouchante (21) pénétrant vers le premier élément,
le procédé de liaison comprenant :
une première étape consistant à former un troisième élément (30) pour comprimer et fixer le deuxième élément entre le premier élément et le troisième élément en soudant un premier matériau de remplissage (6), qui peut être soudé au premier élément, au premier élément à travers la partie débouchante ;
le procédé de liaison étant **caractérisé par** :
une seconde étape consistant à former un quatrième élément (40) pour recouvrir une surface du troisième élément avec un second matériau de remplissage (7), qui peut être soudé au deuxième élément, et à souder le second matériau de remplissage au deuxième élément.

2. Procédé de liaison selon la revendication 1, dans lequel :
la première étape comprend l'étape consistant à former le troisième élément en soudant à l'arc par courts-circuits le premier matériau de remplissage au premier élément, et
la seconde étape comprend l'étape consistant à former le quatrième élément en soudant par impulsions le second matériau de remplissage au deuxième élément.

3. Procédé de liaison selon la revendication 1 ou 2, dans lequel :
le second matériau de remplissage a un diamètre externe égal à un diamètre externe du premier matériau de remplissage ou supérieur au diamètre externe du premier matériau de remplissage.

4. Procédé de liaison selon l'une quelconque des revendications 1 à 3, dans lequel :
la seconde étape comprend :
la formation de périphérie consistant à former une partie périphérique (42) du quatrième élément en soudant le second matériau de remplissage le long d'un bord périphérique externe du troisième élément ; et
après la formation de périphérie, la formation centrale consistant à former une partie centrale (41) du quatrième élément soudé à la partie périphérique, en soudant le second matériau de remplissage pour recouvrir une zone centrale d'une surface du troisième élément.

5. Procédé de liaison selon l'une quelconque des revendications 1 à 3, dans lequel :
la seconde étape comprend :
la formation centrale consistant à former une partie centrale (41) du quatrième élément en soudant le second matériau de remplissage pour recouvrir une zone centrale d'une surface du troisième élément ; et
après la formation centrale, la formation de périphérie consistant à former une partie périphérique (42) du quatrième élément soudé à la partie centrale et au deuxième élément, en soudant le second matériau de remplissage le long d'un bord périphérique externe du troisième élément.

6. Procédé de liaison selon l'une quelconque des revendications 1 à 5, dans lequel :
la première étape comprend :
la première liaison consistant à former une première liaison (35) dans la partie débouchante en soudant le premier matériau de remplissage au premier élément à travers la partie débouchante ; et
après la première liaison, la seconde liaison consistant à former une seconde liaison (36) qui fait saillie radialement vers l'extérieur à partir de la partie débouchante et comprime un bord périphérique de la partie débouchante, en soudant le premier matériau de remplissage à la première liaison dans une condition de soudage différente d'une condition de soudage dans la première liaison.
